# EUROPEAN PATENT SPECIFICATION

(11) **EP 2 027 674 B1**
(45) Date of publication and mention of the grant of the patent: **23.10.2013**
(21) Application number: 07840235.1
(22) Date of filing: 11.06.2007
(51) Int. Cl.: H04L 12/28, H04L 12/46, H04L 12/70

(54) **SUPPORTING MULTI-PROTOCOL LABEL SWITCHING (MPLS) APPLICATIONS OVER ETHERNET SWITCH PATHS**
UNTERSTÜTZUNG VON MPLS-ANWENDUNGEN ÜBER ETHERNET-VERMITTLUNGSWEGEN
GESTION D'APPLICATIONS DE COMMUTATION D'ÉTIQUETTE MULTIPROTOCOLE (MPLS) SUR DES CHEMINS DE COMMUTATION ETHERNET

(30) Priority: 12.06.2006 US 812892 P
(43) Date of publication of application: 25.02.2009
(60) Divisional application: 13182016.9
(73) Proprietor: Nortel Networks Limited, Billerica, MA 01821-5501 (US)
(72) Inventor: OULD-BRAHIM, Hamid, Kanata, Ontario K2M 2S8 (CA)
(74) Representative: Rickard, David John
(86) International application number: PCT/US2007/070915
(87) International publication number: WO 2008/019190

(56) References cited:
- EP-A2- 1 227 623
- EP-A2- 1 351 450
- US-A1- 2003 174 706
- US-A1- 2004 151 180
- US-A1- 2004 213 228
- US-A1- 2004 258 073
- US-A1- 2005 018 605
- US-A1- 2005 089 032
- US-A1- 2005 147 104
- US-B1- 6 526 056

## Description

### FIELD OF THE INVENTION

The invention relates generally to communications networks. More particularly, the invention relates to the support of multi-protocol label switching (MPLS) applications over Ethernet packet-switched paths.

### BACKGROUND

Connection-oriented forwarding technologies, such as Provider Backbone Transport (PBT) and Provider Backbone Bridge (PBB), are enabling native Ethernet to emerge as a viable packet-switched network technology. Consequently, Ethernet is becoming more widely used, particularly in metro-area networks and wide-area networks. Through PBT, service providers are able to establish point-to-point and point-to-multipoint Ethernet tunnels and to specify paths that service traffic will take through their Ethernet networks. In brief, PBT allocates a range of VLAN IDs (VIDs) to identify specific paths through the packet-switched network (PSN) to a given media access control (MAC) destination address. PBT combines the VID and the MAC destination address (total, 60 bits) to produce globally unique identifiers for each path.

The PBB technology, also known as IEEE 802.1ah and MAC-in-MAC, provides Ethernet tunneling by employing a service provider MAC header that encapsulates a customer MAC frame. The service provider MAC header includes backbone-MAC source address (B-MAC SA) and backbone-MAC destination address (B-MAC DA) fields to indicate the source address and destination address, respectively, of the backbone (i.e., the PSN). By isolating the service provider MAC header from the customer MAC header, PBB separates the network into customer domains and service provider domains. Within the service provider domain (i.e., the PSN), the nodes forward packets based on the values in the B-MAC SA/DA and B-VID fields of the service provider MAC header - the customer MAC header is not visible except at the edges of the service provider domain.

To integrate their Ethernet PSNs successfully within the present networking environment, service providers will need to be able to support the transmission of different protocols. For instance, an Ethernet network that is not Multi-Protocol Label Switching (MPLS)-enabled will be unable to service the many different MPLS applications that pervade the communications industry. Thus, service providers with such networks will find a large market of customer applications beyond their reach. There is a need, therefore, for a mechanism that enables a non-MPLS-enabled Ethernet PSN to transport packet traffic associated with MPLS applications.

EP1351450 teaches first and second provider edge devices (PE) separated by an MPLS packet-switched network (PSN). An Ethernet packet can be encapsulated in a label switched path (LSP) tunnel at an ingress PE device and transported over the MPLS PSN to an egress PE device. EP1351450 does not teach that an MPLS packet is received by the ingress PE device from an MPLS network.

### SUMMARY

In one aspect, the invention features a network element connected at a first edge of a packet-switched network. The network element comprises: a service processor and an encapsulator. The service processor receives a packet associated with a multi-protocol label switching 'MPLS' application of any type and delivers the packet to the encapsulator. The encapsulator encapsulates at the network element the packet within an Ethernet frame for transport over an Ethernet switch path 'ESP'. The path extends from the network element at the first edge of the packet-switched network, the network element being an ingress network element, to a provider edge 'PE' device at a remote edge of the packet-switched network. The Ethernet frame is encapsulated by the ingress network element and transported over the ESP. The Ethernet frame includes an Ethertype field with an Ethertype value signifying that the Ethernet frame is carrying an MPLS packet received by the ingress network element from an MPLS network.

In another aspect, the invention features a packet-switched communications network comprising a first provider edge 'PE' device at a first edge of the packet-switched communications network in communication with a second PE device at a second edge of a packet-switched communications network over an Ethernet switch path 'ESP' extending from the first PE device to the second PE device. The first PE device receives a packet associated with a multi-protocol label switching 'MPLS' application of any type from an MPLS network. The first PE device encapsulates the packet for transmission to the second PE device over the ESP in an Ethernet frame having an MPLS-in-ESP header. The MPLS-in-ESP header includes an Ethertype field with an Ethertype value that indicates the Ethernet frame is carrying an MPLS packet.

In still another aspect, the invention features a method of transporting multi-protocol label switching 'MPLS' packets across a packet-switched network 'PSN'. The method comprises: establishing an Ethernet switch path 'ESP' extending from a first provider edge 'PE' device at a first edge of the PSN to a second PE device at a second edge of the PSN. The method also comprises receiving an MPLS packet associated with an MPLS application of any type at the first PE device for forwarding to the second PE device over the ESP. The method further comprises encapsulating the MPLS packet within an Ethernet frame for transport over the ESP, the Ethernet frame including an Ethertype field with an Ethertype value signifying that the Ethernet frame contains an MPLS packet received from an MPLS network, wherein the first PE device is an ingress PE device.

### BRIEF DESCRIPTION OF THE DRAWINGS

The above and further advantages of this invention may be better understood by referring to the following description in conjunction with the accompanying drawings, in which like numerals indicate like structural elements and features in various figures. The drawings are not necessarily to scale, emphasis instead being placed upon illustrating the principles of the invention.
FIG. 1 is a diagrammatic representation of an embodiment of a communications network embodying the invention.
FIG. 2 is a diagram of the communications network of FIG. 1 showing a general frame format for encapsulating a multi-protocol label switch (MPLS) packet having an MPLS label stack, for forwarding over an Ethernet switch path.
FIG. 3A is a diagram of an embodiment of a frame format used to encapsulate MPLS packets for a specific type of Ethernet connection, namely, 802.1q (i.e., virtual local area networks).
FIG. 3B is a diagram of an embodiment of a frame format used to encapsulate MPLS packets for a specific type of Ethernet connection, namely a provider backbone transport trunk.
FIG. 4A is a diagram of the communications network of FIG. 1 showing a general format of an Ethernet frame for transmitting MPLS packets over a pseudo-wire through an Ethernet switch path.
FIG. 4B is a diagram of an embodiment of a frame format used to encapsulate MPLS packets for transport through a pseudo-wire over a provider backbone transport trunk.
FIG. 5 is a diagram of the communications network of FIG. 1 showing a general format of an Ethernet frame for transmitting MPLS packets associated with an MPLS virtual private network application.
FIG. 6 is a flow diagram of an embodiment of a process for transporting MPLS packets across an Ethernet packet-switched network through an Ethernet switch path.

### DETAILED DESCRIPTION

In brief overview, communications networks embodying the invention can transport packets associated with a multi-protocol label switching (MPLS) application over an Ethernet switch path (ESP) established across a packet-switched network (PSN). Such communication networks encapsulate the MPLS packets within an Ethernet frame. The encapsulation includes an MPLS-in-ESP header that enables the transporting of MPLS packets over an ESP. The MPLS-in-ESP header includes an Ethertype field to indicate the particular protocol of the packet encapsulated in the Ethernet frame. In accordance with the principles of the invention, the Ethertype field contains an Ethertype value that identifies the particular protocol as MPLS. This Ethertype value can be used for packets associated with any type of MPLS application and for transport across any type of ESP, an advantageous recognition that a different Ethertype value does not need to be used for each different type of MPLS application or for each different type of ESP.

In one embodiment, the particular Ethertype value in the Ethertype field is equal to 8847. The Request for Comments: 3032 (RFC 3032), entitled "MPLS Label Stack Encoding" defines and uses this particular value for transporting MPLS labeled packets over connectionless local area network (LAN) data links. In brief, the Ethertype value appears after the MAC source address field in the Ethernet frame, and the particular Ethertype value of 8847 indicates that the Ethernet frame is carrying exactly one MPLS unicast packet.

This embodiment of the present invention recognizes and establishes a new use for this particular Ethertype value, namely, for transporting packets associated with any type of MPLS application across a connection-oriented ESP. The reuse of this Ethertype value for a new purpose has the beneficial advantage of facilitating adoption of the present invention within existing service provider networks. That is, enabling network elements to support the transport of any type of MPLS application across an ESP can be accomplished with a software upgrade, without requiring hardware changes - provided such equipment already recognizes the 8847 Ethertype in accordance with RFC 3032.

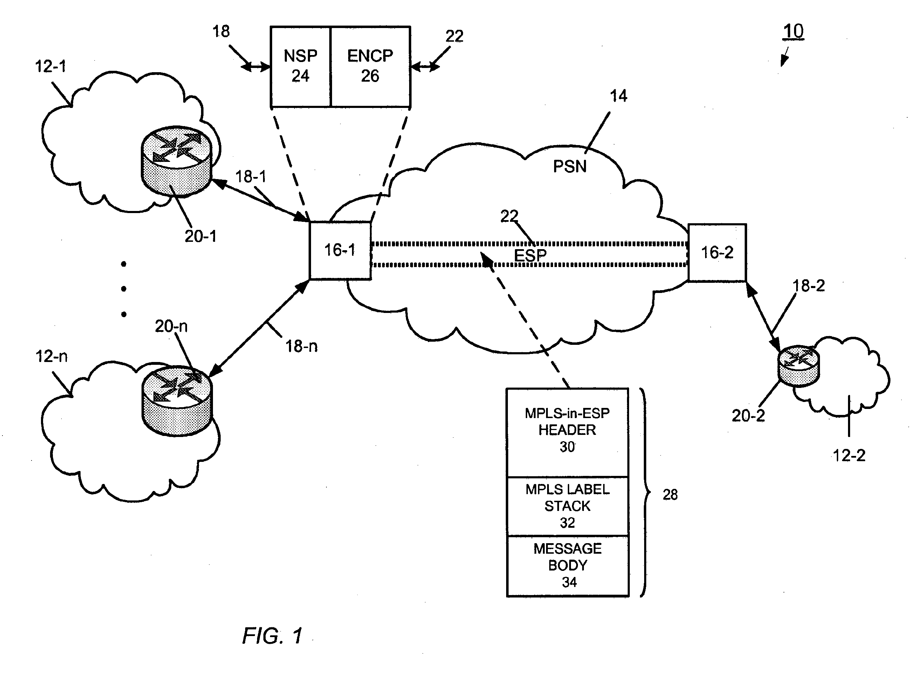

FIG. 1 shows an exemplary communications network 10 in which the principles of the invention may be practiced. The communications network 10 includes one or more customer networks 12-1, 12-2, 12-n (generally, 12) in communication with a packet-switched network (PSN) 14. The customer networks 12 can be carrying traffic associated with any type of MPLS application. The MPLS applications supported by the customer network 12-1 can be the same as or different from those supported by the customer network 12-n. Each customer network 12 includes a customer edge (CE) device 20-1, 20-2, 20-n (generally, 20), each of which is a device at which a network service originates or terminates (or both).

The PSN 14 corresponds to a network domain managed by a service provider. The PSN 14 includes first and second provider edge (PE) devices 16-1, 16-2 (generally, 16). In general, a PE device 16 is a network element - also referred to as a device or a node - that communicates with one or more customer edge (CE) devices connected to a customer network 12. For example, PE device 16-1 is in communication with CE 20-1 and CE 20-n. Each CE 20-1, 20-2, 20-n is in communication with a PE 16 over respective links (e.g., attachment circuits) 18-1, 18-2, 18-n. For purposes of describing the invention, the PE device 16-1 may be referred to as ingress PE device 16-1, and the PE device 16-2 as egress PE device 16-2.

Generally, an attachment circuit is part of a user-to-network interface between the PE device 16-1 and a CE device 20 and comprises a physical or logical link configured for the particular technology of the network service. Example embodiments of attachment circuits include, but are not limited to, a frame relay DLCI (data link connection identifier), an ATM VPI/VCI (virtual path identifier/ virtual channel identifier), an Ethernet port, a VLAN (virtual LAN), an HDLC (high-level data link control) link, a PPP (point-to-point protocol) connection on a physical interface, a PPP session from an L2TP (Layer 2 tunneling protocol) tunnel, and an MPLS LSP (label switch path).

In general, the PE devices 16 are switches adapted to support communications over an ESP. In general, an ESP is a point-to-point or a point-to-multipoint Ethernet connection established between Ethernet-capable network elements. The ESP may be established through manual or automatic provisioning (e.g., through a control plane, such as GMPLS (generalized multi-protocol label switching)).

In the illustrated example, the ingress PE device 16-1 is in communication with the egress PE device 16-2 over an ESP 22. The type of the ESP 22 depends upon the particular technology used to implement the ESP. For example, when GMPLS is used to establish the ESP 22, the ESP 22 is an Ethernet label switch path (E-LSP). As other examples, when the PSN 14 is employing PBT technology, the ESP 22 is a PBT trunk, and when the PSN 14 is employing PBB (802.1ah) technology, the ESP 22 is a PBB (802.1ah) trunk. Not shown are the various intermediate devices (or nodes) in the ESP 22 between the PE devices 16.

In general, the PE devices 16 are able to receive MPLS packets associated with any type of MPLS application from a customer network 20-1, 20-n and process them for transport over the ESP 22. Examples of types of MPLS applications include, but are not limited to, MPLS, virtual private LAN service (VPLS), Layer 3 virtual private network (VPN) as described in RFC 4364, and pseudo-wire (single and multi-segment).

For processing MPLS packets, the PE device 16-1 includes a service processor 24 and an encapsulator 26. In general, the service processor 24 receives and processes labeled packets from the customer networks 12-1, 12-n in accordance with the type of MPLS application of those packets, and delivers the packets to the encapsulator 26. The encapsulator 26 produces an Ethernet frame 28 for transmission over the ESP 22 to the PE device 16-2. As part of the encapsulation, the ingress PE device 16-1 uses the (foreknown) MAC address of the egress PE device 16-2 at the remote end of the ESP 22.

The Ethernet frame 28 includes a service payload (i.e., message body 34) encapsulated with an MPLS-in-ESP header 30 and an MPLS label stack 32 (as defined in RFC 3032). Whereas the contents of the MPLS-in-ESP header 30 depend upon the particular type of ESP 22, the header 30 of the Ethernet frame 28 includes an Ethertype indicator signifying that the Ethernet frame 28 encapsulates an MPLS packet. The contents of the MPLS label stack 32 within that Ethernet frame 28 depend upon the particular type of MPLS application. The label stack 32 can have one or more labels and, in accordance with the principles of the invention, such label or labels can pertain to any type of MPLS application. Although described herein as being part of the MPLS-in-ESP header 30, the Ethertype field may be deemed separate from the MPLS-in-ESP header 30 (e.g., a standalone header or part of the MPLS label stack).

In brief overview, the ingress PE device 16-1 receives packets of an MPLS application from a customer network (e.g., 12-1), encapsulates each packet within an Ethernet frame, and forwards the encapsulated packets to the egress PE device 16-2 over the ESP 22. Upon receiving the packets over the ESP 22, the egress PE device 16-2 de-encapsulates the MPLS packet from the Ethernet frame for forwarding to the customer network 12-2. It is to be understood that the roles of the PE devices 16-1, 16-2 reverse when transporting traffic in the opposite direction over the ESP 22 from the customer network 12-2 to the customer network 12-1. That is, the egress PE device 16-2 operates as a packet-encapsulating ingress PE device and the ingress PE device 16-1 operates as a packet-de-encapsulating egress device.

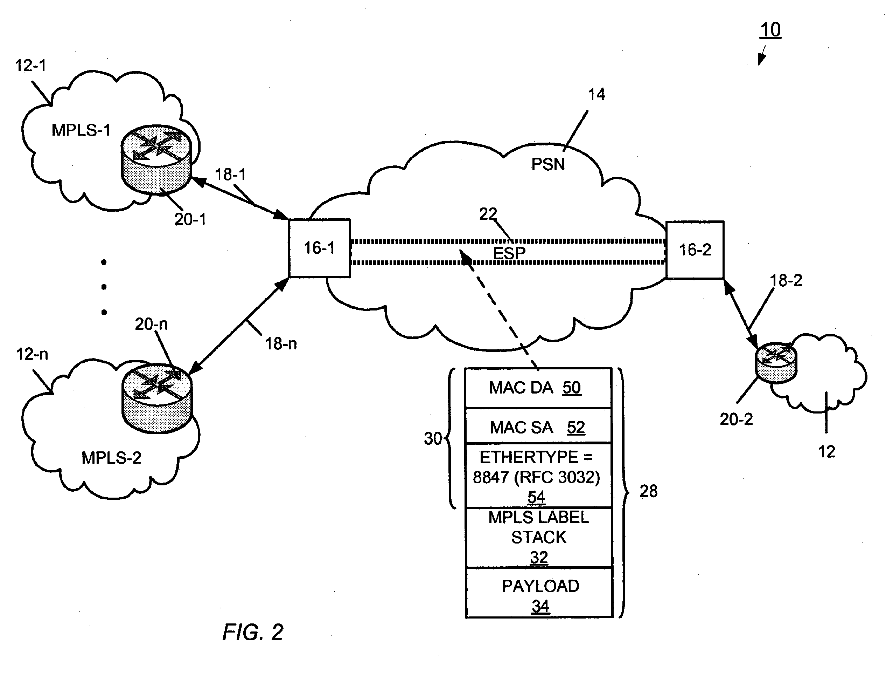

FIG. 2 shows the communications network 10 of FIG. 1 and illustrates a general example of forwarding MPLS packets over the ESP 22. In this example, the customer networks 12-1, 12-n are different MPLS networks, each employing its own set of labels and running its own MPLS protocol. For example, the customer network 12-1 can be running MPLS in accordance with RFC 3031, while customer network 12-n runs an MPLS TE (traffic engineering) protocol that computes a TE-LSP (traffic engineering label switched path) for forwarding traffic therethrough. In this example, the PE devices 16 are label switch routers (LSRs) and the links 18-1, 18-n are label switch paths (LSPs).

In support of these MPLS applications, the PE device 16-1 produces the Ethernet frame 28 (of FIG. 1) with an MPLS-in-ESP header 30, MPLS label stack 32, and payload 34. A general format of the MPLS-in-ESP header 30 includes a MAC Destination Address (DA) 50 of the egress PE device 16-2, the MAC Source Address (SA) 52 of the ingress PE device 16-1, and an Ethertype field 54. In one embodiment (shown), this Ethertype field 54 contains the Ethertype value of 8847 (defined in RFC 3032) to signify that the Ethernet frame 28 includes an MPLS packet (i.e., the MPLS label stack 32 in combination with the payload 34). Another Ethertype value (other than 8847) could be defined for this specific purpose without departing from the principles of the invention.

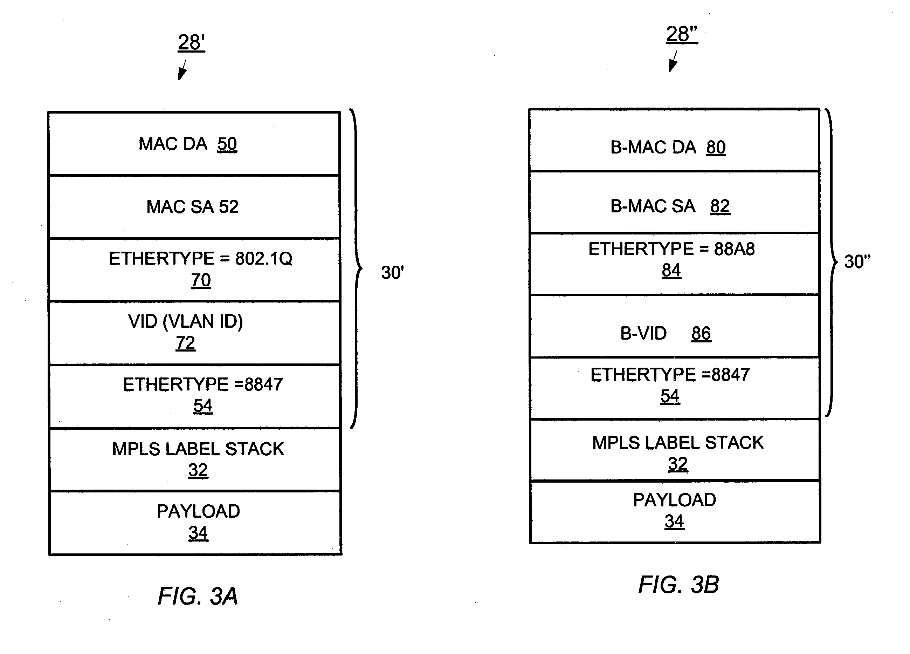

FIG. 3A shows an embodiment of an Ethernet frame 28' for forwarding MPLS labeled packets over a specific type of ESP or Ethernet connection, namely, a virtual LAN or 802.1q connection. The Ethernet frame 28' includes an embodiment of an MPLS-in-ESP header 30' with a MAC DA field 50, a MAC SA field 52, Ethertype field 70 for holding a value signifying Ethertype 802.1q, and a VID (VLAN ID) field 72. The MPLS-in-ESP header 30' also includes a second Ethertype field 54 with an Ethertype value (e.g., 8847) that signifies the Ethernet frame 28' contains an MPLS packet. The Ethernet frame 28' also includes the MPLS label stack 32 and the payload 34.

FIG. 3B shows another embodiment of an Ethernet frame 28" for forwarding MPLS packets over another type of ESP, namely a PBT trunk. The Ethernet frame 28" includes an embodiment of an MPLS-in-ESP header 30" having a B-MAC DA field 80, a B-MAC SA field 82, an Ethertype field 84 for holding a value equal to 88A8 to signify PBT, and a B-VID field 86. Here, as an example, considered part of the MPLS-in-ESP header 30", the Ethertype field 54 holds the Ethertype value (e.g., 8847) signifying that the Ethernet frame 28" contains an MPLS labeled packet. The Ethernet frame 28" also includes the MPLS label stack 32 and the payload 34.

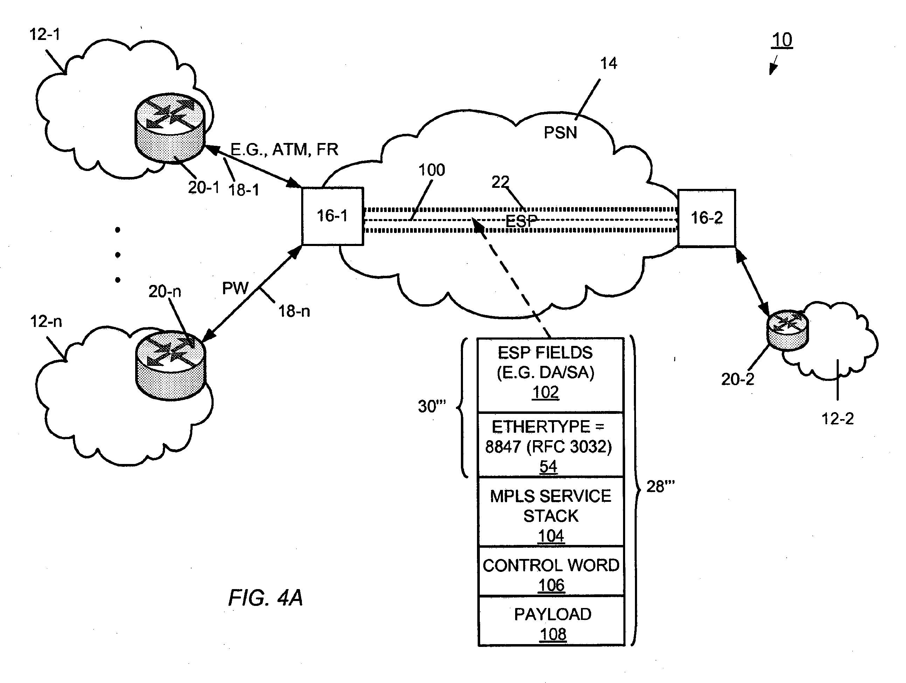

FIG. 4A shows the communications network 10 of FIG. 1 and illustrates an example of carrying MPLS packets over the ESP 22 using a pseudo-wire technology. In general, a pseudo-wire (PW) emulates the attributes of a native service supported across the PSN. In effect, the PW decouples the native service, i.e., the protocols and applications, from the underlying facilities that carry the service. The types of emulated services that may be carried by a PW include, but are not limited to, Asynchronous Transfer Mode (ATM), Frame Relay (FR), Point-to-Point Protocol (PPP), High Level Data Link Control (HDLC), Synchronous Optical Network (SONET), Synchronous Digital Hierarchy (SDH), X.25, TDM (Time Division Multiplexing), DSL (Digital Subscriber Line), and Ethernet.

In this example, the ingress PE 16-1 and egress PE 16-2 have established a PW 100 in accordance with a control protocol, such as the protocol described in Martini, L. et al, "Pseudowire Setup and Maintenance using the Label Distribution Protocol (LDP)", RFC 4447, April 2006. The PW 100 traverses the PSN 14 from the ingress PE device 16-1 to the egress PE device 16-2 through the ESP 22. Again, intermediate devices in the ESP 22 are not shown.

In one embodiment, the customer network 12-1 is running an MPLS application in support of any one of a variety of native services (e.g., ATM, Ethernet, Frame Relay, T1/T3, TDM, etc.). The type of link 18-1 between the CE device 20-1 and the ingress PE device 16-1 depends upon the technology of the emulated service. For example, if the customer network 12-1 is supporting an ATM native service, the link 18-1 is an ATM link. The ingress PE device 16-1 provides an interface between this native service and the PW 100. The CE device 20-1 operates unaware that the PSN 14 is employing the PW 100 to provide an emulated service instead of a native service; in this embodiment, the PW 100 is a single segment (SS) PW.

In another embodiment, the customer network (e.g., 12-n) establishes a PW in order to emulate a native service within the customer network 12-n. The link 18-n between the CE device 20-n and the ingress PE device 16-1 is an extension of the established PW. The ingress PE device 16-1 accomplishes a hand-off from the PW of the customer network 12-1 and the PW 100 traversing the PSN 14; in this embodiment, the PW 100 is a segment of a multi-segment (MS) PW.

For either SS PW or MS PW, the ingress PE device 16-1 produces an Ethernet frame 28"' with an MPLS-in-ESP header 30'" comprised of ESP-dependent fields 102, the Ethertype field 54 with the Ethertype value (e.g., 8847) signifying that the Ethernet frame contains an MPLS packet, a MPLS service stack 104, an optional control word 106, and the payload 108. The contents of the ESP-dependent fields 102 depend upon the particular type of ESP 22 (e.g., a PBT trunk, PBT/PBB trunk, an 802.1q connection). Such contents typically include source and destination MAC addresses, an Ethertype that corresponds to the type of ESP, and other identifiers such as VIDs and B-VIDs. The control word 106 is an optional header used in some encapsulations to carry per-packet information (e.g., to distinguish PW payload from standard IP payload). The Ethernet frame format 28"' shown in FIG. 4A applies also to VPLS applications.

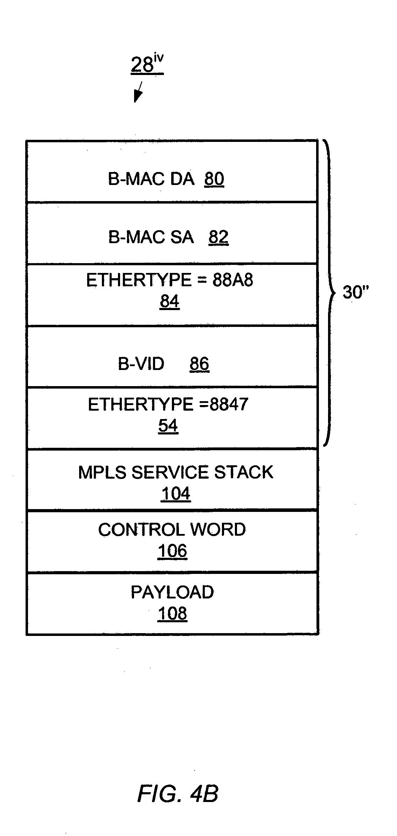

FIG. 4B shows an embodiment of an Ethernet frame 28iv for transporting MPLS packets over a PBT trunk through a PW. The Ethernet frame 28iv includes an embodiment of an MPLS-in-ESP header 30" (FIG. 3B) with the B-MAC DA field 80, B-MAC SA field 82, Ethertype field 84 for holding a value equal to 88A8 to signify PBT, and the B-VID field 86. Again, the Ethertype field 54 holds the Ethertype value (e.g., 8847) signifying that the Ethernet frame 28iv contains an MPLS packet. The Ethernet frame 28iv also includes the MPLS service stack 104, control word 106, and payload 108. Architecture and procedures for the operation of PWs over PBT are described "Pseudo Wires over Provider Backbone Transport", IETF Internet Draft, draft-allan-pw-o-pbt-02.txt, by Allan et al., February 2007.

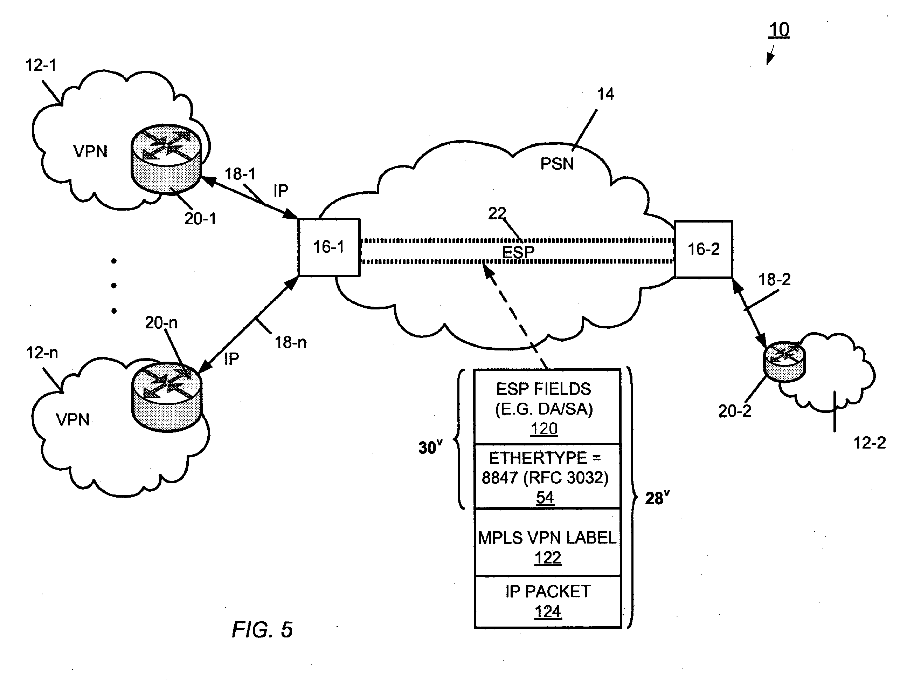

FIG. 5 shows the communications network 10 of FIG. 1 and illustrates an example of forwarding MPLS packets associated with a virtual private network (VPN) application over the ESP 22. In this example, the customer networks 12-1, 12-n are separate, independent networks, one or more of which is running VPN in accordance with RFC 2547 or RFC 4364. MPLS packets associated with a VPN service arrive at the PE device 16-1 over an IP link (e.g., 18-1). The PE device 16-1 produces an Ethernet frame 28v with an MPLS-in-ESP header 30v having ESP-dependent fields 120, the Ethertype field 54 with the Ethertype value (e.g., 8847) signifying that the Ethernet frame contains an MPLS packet, a MPLS VPN label 122, and an IP packet 124. The contents of the ESP-dependent field 120 depend upon the particular type of ESP 22 (e.g., a PBT trunk, PBT/PBB trunk, an 802.1q connection).

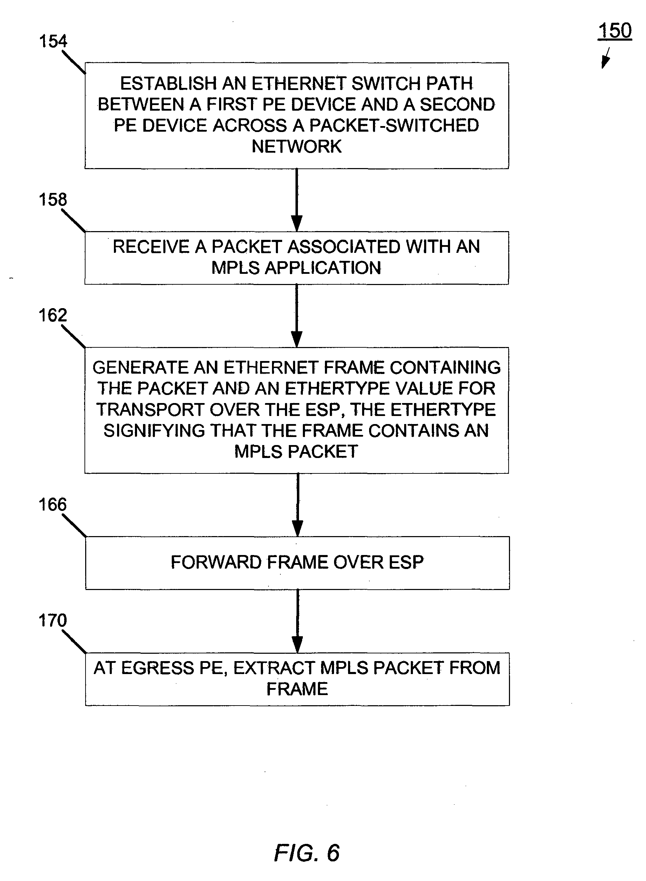

FIG. 6 shows an embodiment of a process 150 for forwarding MPLS packets over a non-MPLS packet-switched network. For purposes of illustrating the process 150, reference is also made to elements of FIG. 1. At step 154, the ESP 22 between the ingress PE device 16-1 and an egress PE device 16-2 is established (e.g., manually provisioned, dynamically configured) through the PSN 14. The ingress PE device 16-1 receives (step 158) a packet associated with an MPLS application running on a customer network 12. The MPLS application may be of any type. The ingress PE device 16-1 generates (step 162) an Ethernet frame 28 that includes the packet and an Ethertype value (e.g., equal to 8847) to signify that the Ethernet frame includes an MPLS packet.

At step 166, the ingress PE device 16-1 forwards the Ethernet frame over the ESP 22. Typically, one or more intermediate nodes route the Ethernet frame 28 to the egress PE device 16-2 in accordance with the type of ESP 22 (i.e., based on the information in the MAC DA and VID fields in the MPLS-in-ESP header 30). Upon receiving the Ethernet frame 28, the egress PE device 16-2 extracts (step 170) the MPLS packet from the frame and forwards the packet to the CE device 20-2 of the customer network 12-2.

Aspects of the present invention may be embodied in hardware or software (i.e., program code). Program code may be embodied as computer-executable instructions on or in one or more articles of manufacture, or in or on computer-readable medium. A computer, computing system, or computer system, as used herein, is any programmable machine or device that inputs, processes, and outputs instructions, commands, or data. In general, any standard or proprietary, programming or interpretive language can be used to produce the computer-executable instructions. Examples of such languages include C, C++, Pascal, JAVA, BASIC, Visual Basic, and Visual C++.

Examples of articles of manufacture and computer-readable medium in which the computer-executable instructions may be embodied include, but are not limited to, a floppy disk, a hard-disk drive, a CD-ROM, a DVD-ROM, a flash memory card, a USB flash drive, an non-volatile RAM (NVRAM or NOVRAM), a FLASH PROM, an EEPROM, an EPROM, a PROM, a RAM, a ROM, a magnetic tape, or any combination thereof. The computer-executable instructions may be stored as, e.g., source code, object code, interpretive code, executable code, or combinations thereof. Further, although described predominantly as software, embodiments of the described invention may be implemented in hardware (digital or analog), software, or a combination thereof.

While the invention has been shown and described with reference to specific preferred embodiments, it should be understood by those skilled in the art that various changes in form and detail may be made therein without departing from the scope of the invention as defined by the following claims.

## Claims

1. A network element (16-1) connected at a first edge of a packet-switched network (14), the network element (16-1) comprising:
a service processor (24) and an encapsulator (26), the service processor (24) receiving a packet associated with a multi-protocol label switching 'MPLS' application of any type and delivering the packet to the encapsulator (26); the encapsulator (26) encapsulating at the network element (16-1) the packet within an Ethernet frame (28) for transport over an Ethernet switch path 'ESP' (22) extending from the network element (16-1) at the first edge of the packet-switched network(14), the network element (16-1) being an ingress network element, to a provider edge 'PE' device (16-2) at a remote edge of the packet-switched network (14), the Ethernet frame (28) encapsulated by the ingress network element (16-1) and transported over the ESP (22), the Ethernet frame (28) including an Ethertype field with an Ethertype value signifying that the Ethernet frame (28) is carrying an MPLS packet received by the ingress network element (16-1) from an MPLS network.

2. The network element (16-1) of claim 1, wherein the Ethertype value is equal to 8847.

3. The network element (16-1) of claim 1 or claim 2, wherein the MPLS application is any of: pseudo-wire over MPLS; a virtual private LAN service 'VPLS' application; or a virtual private network 'VPN' application.

4. The network element (16-1) of any one of the preceding claims, wherein the Ethernet switch path (22) is a provider backbone transport 'PBT' trunk or a provider backbone bridging 'PBB' trunk.

5. The network element (16-1) of any one of the preceding claims, wherein the Ethernet frame (28) with a header (30) comprises a destination field address containing a media access control 'MAC' address (50) of the PE device (16-2) at the remote edge of the packet-switched network (14) and a source address field containing a MAC address (52) of the network element (16-1) at the first edge of the packet-switched network (14).

6. A packet-switched communications network (14) comprising a first provider edge 'PE' device (16-1) at a first edge of the packet-switched communications network (14) in communication with a second PE device (16-2) at a second edge of a packet-switched communications network (14) over an Ethernet switch path 'ESP' (22) extending from the first PE device (16-1) to the second PE device (16-2), the first PE device (16-1) receiving a packet associated with a multi-protocol label switching 'MPLS' application of any type from an MPLS network, the first PE device (16-1) encapsulating the packet for transmission to the second PE device (16-2) over the ESP (22) in an Ethernet frame (28) having an MPLS-in-ESP header (30), the MPLS-in-ESP header (30) including an Ethertype field (54) with an Ethertype value that indicates the Ethernet frame (28) is carrying an MPLS packet.

7. The communications network (14) of claim 6, wherein the Ethertype value is equal to 8847.

8. The communications network (14) of claim 6 or claim 7, wherein the MPLS application is any of: a pseudo-wire over MPLS application; a virtual private LAN service 'VPLS' application; or a virtual private network 'VPN' application.

9. The communications network (14) of any one of claims 6 to 8, wherein the Ethernet Switch Path (22) is a provider backbone transport 'PBT' trunk or a provider backbone bridging 'PBB' trunk.

10. The communications network (14) of any one of claims 6 to 9, wherein the Ethernet frame (28) with a header (30) comprises a destination field address containing a media access control 'MAC' address (50) of the second PE device (16-2) at the second edge of the packet-switched network (14) and a source address field containing a MAC address (52) of the first PE device (16-1) at the first edge of the packet-switched network (14).

11. A method of transporting multi-protocol label switching 'MPLS' packets across a packet-switched network 'PSN' (14), the method comprising:
establishing an Ethernet switch path 'ESP' (22) extending from a first provider edge 'PE' device (16-1) at a first edge of the PSN (14) to a second PE device (16-2) at a second edge of the PSN (14);
receiving an MPLS packet associated with an MPLS application of any type at the first PE device (16-1) for forwarding to the second PE device (16-2) over the ESP (22); and
encapsulating the MPLS packet within an Ethernet frame (28) for transport over the ESP (22), the Ethernet frame (28) including an Ethertype field (54) with an Ethertype value signifying that the Ethernet frame contains an MPLS packet received from an MPLS network, wherein the first PE device (16-1) is an ingress PE device.

12. The method of claim 11, wherein the Ethertype value is equal to 8847.

13. The method of claim 11 or claim 12, wherein the MPLS application is any of: a pseudo-wire over MPLS application; a virtual private LAN service 'VPLS' application; or a virtual private network 'VPN' application.

14. The method of any one of claims 11 to 13, wherein the Ethernet Switch Path (22) is a provider backbone transport 'PBT' trunk or a provider backbone bridging 'PBB' trunk.

15. The method of any one of claims 11 to 14, wherein the Ethernet frame (28) with a header (30) comprises a destination field address containing a media access control 'MAC' address (50) of the second PE device (16-2) at the second edge of the packet-switched network (14) and a source address field containing a MAC address (52) of the first PE device (16-1) at the first edge of the packet-switched network (14).

## Patentansprüche

1. Ein an einer ersten Kante eines paketgeschalteten Netzwerks (14) angeschlossenes Netzwerkelement (16-1), bestehend aus einem Serviceprozessor (24) und einem Encapsulator (26), wobei der Serviceprozessor (24) ein mit einer beliebigen Art von MPLS-Anwendung (Multi-Protocol Label Switching) assoziiertes Paket empfängt und an den Encapsulator (26) weiterleitet und der Encapsulator (26) das Paket am Netzwerkelement (16-1) zur Weiterleitung über einen vom Netzwerkelement (16-1) an der ersten Kante des paketgeschalteten Netzwerks (14) zu einem Provider-Edge-Gerät (PE-Gerät) (16-2) an einer entfernten Kante des paketgeschalteten Netzwerks (14) verlaufenden Ethernet-Switch-Path (ESP) (22) in einen Ethernet-Frame (28) kapselt, wobei es sich bei dem Netzwerkelement (16-1) um ein Ingress-Netzwerkelement handelt, der Ethernet-Frame (28) vom Ingress-Netzwerkelement (16-1) gekapselt und über den ESP (22) übertragen wird und der Ethernet-Frame (28) ein Ethertype-Feld mit einem Ethertype-Wert enthält, der anzeigt, dass der Ethernet-Frame (28) ein vom Ingress-Netzwerkelement (16-1) von einem MPLS-Netzwerk empfangenes MPLS-Paket überträgt.

2. Das Netzwerkelement (16-1) nach Anspruch 1, wobei der Ethertype-Wert 8847 entspricht.

3. Das Netzwerkelement (16-1) nach Anspruch 1 oder 2, wobei die MPLS-Anwendung entweder eine Pseudowire-über-MPLS-Anwendung, eine VPLS-Anwendung (Virtueller Privater LAN-Service) oder eine VPN-Anwendung (Virtuelles Privates Netzwerk) ist.

4. Das Netzwerkelement (16-1) nach einem der voranstehenden Ansprüche, wobei der Ethernet-Switch-Path (22) entweder ein PBT-Trunk (Provider Backbone Transport Trunk) oder ein PBB-Trunk (Provider Backbone Bridging Trunk) ist.

5. Das Netzwerkelement (16-1) nach einem der voranstehenden Ansprüche, wobei der Ethernet-Frame (28) mit Header (30) ein Zieladressfeld mit einer MAC-Adresse (Medienzugriffskontrolle) (50) des PE-Geräts (16-2) an der entfernten Kante des paketgeschalteten Netzwerks (14) und ein Quellenadressfeld mit einer MAC-Adresse (52) des Netzwerkelements (16-1) an der ersten Kante des paketgeschalteten Netzwerks (14) enthält.

6. Ein paketgeschaltetes Kommunikationsnetz (14), das an einer ersten Kante des paketgeschalteten Kommunikationsnetz (14) ein erstes PE-Gerät (16-1) aufweist, welches mit einem zweiten PE-Gerät (16-2) an einer zweiten Kante eines paketgeschalteten Kommunikationsnetzes (14) über einen Ethernet-Switch-Path (22) kommuniziert, wobei der Ethernet-Switch-Path vom ersten PE-Gerät (16-1) zum zweiten PE-Gerät (16-2) verläuft, das erste PE-Gerät (16-1) ein mit einer beliebigen Art von MPLS-Anwendung assoziiertes Paket von einem MPLS-Netzwerk empfängt und das erste PE-Gerät (16-1) das Paket zur Übermittlung an das zweite PE-Gerät (16-2) über den Ethernet-Switch-Path (22) in einen Ethernet-Frame (28) mit MPLS-in-ESP-Header (30) kapselt, wobei der MPLS-in-ESP-Header (30) ein Ethertype-Feld (54) mit einem Ethertype-Wert enthält, der anzeigt, dass der Ethernet-Frame (28) ein MPLS-Paket überträgt.

7. Das Kommunikationsnetz (14) nach Anspruch 6, wobei der Ethertype-Wert 8847 entspricht.

8. Das Kommunikationsnetz (14) nach Anspruch 6 oder 7, wobei die MPLS-Anwendung entweder eine Pseudowire-über-MPLS-Anwendung, eine VPLS-Anwendung (Virtueller Privater LAN-Service) oder eine VPN-Anwendung (Virtuelles Privates Netzwerk) ist.

9. Das Kommunikationsnetz (14) nach einem der voranstehenden Ansprüche 6 bis 8, wobei der Ethernet-Switch-Path (22) entweder ein PBT-Trunk (Provider Backbone Transport Trunk) oder ein PBB-Trunk (Provider Backbone Bridging Trunk) ist.

10. Das Kommunikationsnetz (14) nach einem der voranstehenden Ansprüche 6 bis 9, wobei der Ethernet-Frame (28) mit Header (30) ein Zieladressfeld mit einer MAC-Adresse (50) des zweiten PE-Geräts (16-2) an der zweiten Kante des paketgeschalteten Netzwerks (14) und ein Quellenadressfeld mit einer MAC-Adresse (52) des ersten PE-Geräts (16-1) an der ersten Kante des paketgeschalteten Netzwerks (14) enthält.

11. Ein Verfahren zum Übertragen von MPLS-Paketen über ein paketgeschaltetes Netzwerk (14), wobei das Verfahren Folgendes umfasst:
Herstellung eines Ethernet-Switch-Paths (22), der von einem ersten PE-Gerät (16-1) an einer ersten Kante des paketgeschalteten Netzwerks (14) zu einem zweiten PE-Gerät (16-2) an einer zweiten Kante des paketgeschalteten Netzwerks (14) verläuft;
Eingang eines mit einer beliebigen Art von MPLS-Anwendung assoziierten MPLS-Pakets am ersten PE-Gerät (16-1) und Weiterleitung desselben an das zweite PE-Gerät (16-2) über den Ethernet-Switch-Path (22), und
Kapseln des MPLS-Pakets in einen Ethernet-Frame (28) zur Weiterleitung über den Ethernet-Switch-Path (22), wobei der Ethernet-Frame (28) ein Ethertype-Feld (54) mit einem Ethertype-Wert enthält, der anzeigt, dass der Ethernet-Frame (28) ein von einem MPLS-Netzwerk empfangenes MPLS-Paket enthält, und wobei das erste PE-Gerät (16-1) ein Ingress-PE-Gerät ist.

12. Das Verfahren nach Anspruch 11, wobei der Ethertype-Wert 8847 entspricht.

13. Das Verfahren nach Anspruch 11 oder 12, wobei die MPLS-Anwendung entweder eine Pseudowire-über-MPLS-Anwendung, eine VPLS-Anwendung (Virtueller Privater LAN-Service) oder eine VPN-Anwendung (Virtuelles Privates Netzwerk) ist.

14. Das Verfahren (14) nach einem der voranstehenden Ansprüche 11 bis 13, wobei der Ethernet-Switch-Path (22) entweder ein PBT-Trunk (Provider Backbone Transport Trunk) oder ein PBB-Trunk (Provider Backbone Bridging Trunk) ist.

15. Das Verfahren nach einem der voranstehenden Ansprüche 11 bis 14, wobei der Ethernet-Frame (28) mit Header (30) ein Zieladressfeld mit einer MAC-Adresse (50) des zweiten PE-Geräts (16-2) an der zweiten Kante des paketgeschalteten Netzwerks (14) und ein Quellenadressfeld mit einer MAC-Adresse (52) des ersten PE-Geräts (16-1) an der ersten Kante des paketgeschalteten Netzwerks (14) enthält.

## Revendications

1. Elément de réseau (16-1) connecté à une première bordure d'un réseau de commutation de paquets (14), l'élément de réseau (16-1) comprenant :
un processeur de service (24) et un encapsuleur (26), le processeur de service (24) recevant un paquet associé à une application de commutation d'étiquette multiprotocole « MPLS » de n'importe quel type et livrant le paquet à l'encapsuleur (26) ; l'encapsuleur (26) encapsulant au niveau de l'élément de réseau (16-1) le paquet au sein d'une trame Ethernet (28) pour le transporter sur un chemin de commutation Ethernet « ESP » (22) s'étendant de l'élément de réseau (16-1) au niveau de la première bordure du réseau à commutation de paquets (14), l'élément de réseau (16-1) étant un élément de réseau d'entrée, à un dispositif de bordure de fournisseur « PE » (16-2) au niveau d'une bordure éloignée du réseau à commutation de paquets (14), la trame Ethernet (28) encapsulée par l'élément de réseau d'entrée (16-1) et transportée sur le ESP (22), la trame Ethernet (28) comprenant un champ Ethertype avec une valeur Ethertype signifiant que la trame Ethernet (28) transporte un paquet MPLS reçu par l'élément de réseau d'entrée (16-1) d'un réseau MPLS.

2. Elément de réseau (16-1) selon la revendication 1, dans lequel la valeur Ethertype est égale à 8847.

3. Elément de réseau (16-1) selon la revendication 1 ou la revendication 2, dans lequel l'application MPLS est comprise dans le groupe comprenant : pseudo-fil sur MPLS ;
une application de service LAN virtuel privé « VPLS » ; ou une application de réseau virtuel privé « VPN ».

4. Elément de réseau (16-1) selon l'une quelconque des revendications précédentes, dans lequel le chemin de commutation Ethernet (22) est un circuit de transport principal de fournisseur « PBT » ou un circuit de pont principal de fournisseur « PBB ».

5. Elément de réseau (16-1) selon l'une quelconque des revendications précédentes, dans lequel la trame Ethernet (28) avec une en-tête (30) comprend un champ d'adresse de destination contenant une adresse de contrôle d'accès physique « MAC » (50) du dispositif PE (16-2) au niveau de la bordure éloignée du réseau à commutation de paquets (14) et un champ d'adresse source contenant une adresse MAC (52) de l'élément de réseau (16-1) au niveau de la première bordure du réseau à commutation de paquets (14).

6. Réseau à commutation de paquets (14) comprenant un premier dispositif de bordure de fournisseur « PE » (16-1) au niveau d'une première bordure du réseau de communications à commutation de paquets (14) en communication avec un deuxième dispositif PE (16-2) au niveau d'une deuxième bordure d'un réseau de communications à commutation de paquets (14) sur un chemin de commutation Ethernet « ESP » (22) s'étendant du premier dispositif PE (16-1) au deuxième dispositif PE (16-2), le premier dispositif PE (16-1) recevant un paquet associé à une application de commutation d'étiquette multiprotocole « MPLS » de n'importe quel type venant d'un réseau MPLS,
le premier dispositif PE (16-1) encapsulant le paquet pour le transmettre au deuxième dispositif PE (16-2) sur le ESP (22) dans une trame Ethernet (28) ayant une en-tête MPLS-dans-ESP (30), l'entête MPLS-dans-ESP (30) comprenant un champ Ethertype (54) avec une valeur Ethertype qui indique que la trame Ethernet (28) transporte un paquet MPLS.

7. Réseau de communications (14) selon la revendication 6, dans lequel la valeur Ethertype est égale à 8847.

8. Réseau de communications (14) selon la revendication 6 ou la revendication 7, dans lequel l'application MPLS est comprise dans le groupe comprenant : une application pseudo-fil sur MPLS ; une application de service LAN virtuel privé « VPLS »; ou une application de réseau virtuel privé « VPN ».

9. Réseau de communications (14) selon l'une quelconque des revendications 6 à 8, dans lequel le chemin de commutation Ethernet (22) est un circuit de transport principal de fournisseur « PBT » ou un circuit de pont principal de fournisseur« PBB ».

10. Réseau de communications (14) selon l'une quelconque des revendications 6 à 9, dans lequel la trame Ethernet (28) avec une en-tête (30) comprend un champ d'adresse de destination contenant une adresse de contrôle d'accès physique « MAC » (50) du deuxième dispositif PE (16-2) au niveau de la deuxième bordure du réseau à commutation de paquets (14) et un champ d'adresse source contenant une adresse MAC (52) du premier dispositif PE (16-1) au niveau de la première bordure du réseau à commutation de paquets (14).

11. Procédé pour transporter des paquets de commutation d'étiquette multiprotocole « MPLS » sur un réseau à commutation de paquets « PSN » (14), le procédé comprenant :
la création d'un chemin de commutation Ethernet « ESP » (22) s'étendant d'un premier dispositif de bordure de fournisseur « PE » (16-1) au niveau d'une première bordure du PSN (14) à un deuxième dispositif PE (16-2) au niveau d'une deuxième bordure du PSN (14) ;
la réception d'un paquet MPLS associé à une application MPLS de n'importe quel type au niveau du premier dispositif PE (16-1) pour l'envoyer au deuxième dispositif PE (16-2) sur le ESP (22) ; et
l'encapsulation du paquet MPLS au sein d'une trame Ethernet (28) pour le transporter sur le ESP (22), la trame Ethernet (28) comprenant un champ Ethertype (54) avec une valeur Ethertype signifiant que la trame Ethernet contient un paquet MPLS reçu d'un réseau MPLS, dans lequel le premier dispositif PE (16-1) est un dispositif PE d'entrée.

12. Procédé selon la revendication 11, dans lequel la valeur Ethertype est égale à 8847.

13. Procédé selon la revendication 11 ou la revendication 12, dans lequel l'application MPLS est comprise dans le groupe comprenant : une application pseudo-fil sur MPLS ; une application de service LAN virtuel privé « VPLS »; ou une application de réseau virtuel privé « VPN ».

14. Procédé selon l'une quelconque des revendications 11 à 13, dans lequel le chemin de commutation Ethernet (22) est un circuit de transport principal de fournisseur « PBT » ou un circuit de pont principal de fournisseur « PBB ».

15. Procédé selon l'une quelconque des revendications 11 à 14, dans lequel la trame Ethernet (28) avec une en-tête (30) comprend un champ d'adresse de destination contenant une adresse de contrôle d'accès physique « MAC » (50) du deuxième dispositif PE (16-2) au niveau de la deuxième bordure du réseau à commutation de paquets (14) et un champ d'adresse source contenant une adresse MAC (52) du premier dispositif PE (16-1) au niveau de la première bordure du réseau à commutation de paquets (14).
